# EUROPEAN PATENT SPECIFICATION

(11) **EP 2 463 157 B1**
(45) Date of publication and mention of the grant of the patent: **15.04.2015**
(21) Application number: 10194469.2
(22) Date of filing: 10.12.2010
(51) Int. Cl.: B60R 1/12, B60Q 1/26, G02B 6/00

(54) **Rear view mirror assembly with optical indicator**
Rückspiegelanordnung mit optischem Anzeiger
Ensemble de rétroviseur avec indicateur optique

(43) Date of publication of application: 13.06.2012
(73) Proprietor: SMR Patents S.à.r.l., 1653 Luxembourg (LU)
(72) Inventor: Goldschmidt, Sönke, 71384, Weinstadt (DE); Beuzeville, Xavier, 77820, Les Ecrennes (FR); Baggi, Thomas, 77176, Savigny le Temple (FR)
(74) Representative: Weber-Bruls, Dorothée

(56) References cited:
- EP-A1- 1 970 736
- WO-A1-2006/017019
- JP-A- 2004 111 384
- US-A- 5 938 320
- US-A1- 2002 163 790
- US-A1- 2007 058 257
- US-A1- 2007 248 714
- US-A1- 2009 115 631

## Description

### BACKGROUND ART

### 1. Field of the Invention

The invention relates to an assembly with an optical indicator placed in a side rear view mirror assembly for a motor vehicle. More particularly, the invention relates to an optical indicator that is mounted to shine through the mirror glass of the side rear view mirror assembly and is preferably used as alert signal and for identifying when an object is occupying the blind spot of the motor vehicle. In fact, the invention refers to a rear view mirror assembly of the preamble of claim 1 .

### 2. Description of the Related Art

The driver of a motor vehicle must recognize that objects such as other motor vehicles move with respect to the motor vehicle being driven by the driver. As such, the driver must constantly review his or her surroundings to determine whether a desired path of travel is not obstructed or, if taken, would cause a collision. Tools that assist a driver in reviewing the space surrounding the motor vehicle include the rear view mirror and the side rear view mirrors. These mirrors allow the driver to review the surroundings generally disposed behind the driver without the driver having to turn his or her head more than a minimal amount. Locations commonly referred to as "blind spots" exist on either side of the motor vehicle. These blind spots are spaces that are not visible to the driver when the driver is looking in the mirrors and viewing of these blind spots requires the driver to turn his or her head to look to see if another motor vehicle of some other object has entered the blind spots. To overcome this problem, blind spot indicators have sensors that identify when objects enter blind spots. These sensors notify the driver that a blind spot is now being occupied. Indicators in the art include light generators and sound generators. Placement of these generators is critical as it is in the best interests of the driver to have these located within the driver's peripheral vision and in an area where the driver frequently looks.

Optical indicators are used to arise attention of the driver of a vehicle that a hazardous situation is recognized by automatic sensors. Blind spot detection is one of these alert indications. There are other hazardous situations that can be detected by sensors and indicated with the alert indicator. Examples are a distance control, surrounding monitoring, crash warning, temperature indication and ice warning, status indications etc.

It is known form US 6276821 to mount an indicator behind a mirror glass to shine through the reflective surface. In figure 44 of the prior art an example is shown, that comprises a backing plate with an integrated device that covers a LED and a light guide structure. The backing plate is connected to the mirror glass and is adjustable mounted in the mirror head.

The prior art solution does not fulfill the need to direct light to driver's eyes in a sufficient way and to be designed for an easy and cost efficient way.

A rear view mirror assembly according to the preamble of claim 1 is known from US 5,938,320.

EP 1 970 736 A1 discloses a rear view mirror assembly within which a light beam can be coupled into a light conductor which is provided with a reflector side and a decoupling optics through which the light beam is directed outward through at least a portion of a mirror glass.

US 2009/0115631 A1 refers to an exterior mirror with indicator. A signal indication module includes a circuit element with a light source disposed thereat and being positioned at a rear portion of a housing with the light source being positioned opposite a reflective element.

A display device for an exterior rear view mirror is known from US 2007/0058257 A1 with an inclined light guide pin.

Optics for controlling the direction of light rays are described in WO 2006/017019 A1.

### SUMMARY OF THE INVENTION

It is the object of the invention to further develop the known rear view mirror assembly. This object is achieved by the features of the characterizing portion of claim 1.

A side rear view mirror assembly is used in conjunction with a motor vehicle equipped with a blind spot sensor designed to detect objects in blind spots of the motor vehicle. The side rear view mirror assembly includes a base fixedly secured to the motor vehicle. A mirror case is movably secured to the base. The mirror case defines a housing and a mirror opening facing rearward. A backing plate is operatively connected to the mirror case facing rearward. The backing plate is movable with respect to the mirror case. A mirror glass is fixedly secured to the backing plate and movable therewith in a manner allowing an operator of the motor vehicle to view rearward of the motor vehicle. The side rear view mirror assembly also includes a blind spot indicator fixedly secured to the backing plate and in communication with the blind spot sensor to receive signals from the blind spot sensor and to indicate to the operator of the motor vehicle when an object is in a blind spot of the motor vehicle. The blind spot indicator is directed at the operator when the operator moves the backing plate to adjust the mirror glass. The indicator is integrated into the backing plate and has a small height. The optical indicator is structured with at least one light source and a light guide designed as a wedge and forming a tray.

### BRIEF DESCRIPTION OF THE DRAWINGS

Advantages of the invention will be readily appreciated as the same becomes better understood by reference to the following detailed description when considered in connection with the accompanying drawings, wherein:
Figure 1 is a top view of a motor vehicle with a second motor vehicle located in a blind spot of the first motor vehicle;
Figure 2 is a perspective view of one typical embodiment in prior art;
Figure 3 is a view of mirror glass and backing plate with indication signs;
Figure 4 is a cross section of an assembly with the mirror glass of Fig. 3;
Figures 5 and 6 are top views of the embodiment of Figure 4;
Figures 7 and 8 show a backing plate and a light guide;
Figures 9 and 10 show an embodiment of the invention;
Figure 11 shows an example of harness; and
Figures 12 to 14 show different views of the light guide of the invention.

### DETAILED DESCRIPTION OF THE PREFERRED EMBODIMENT

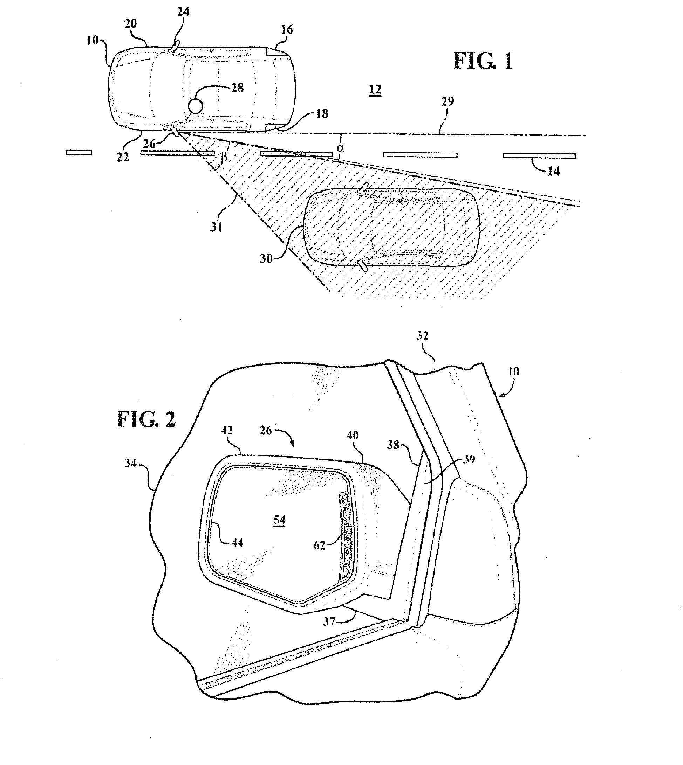

Referring to Figure 1, a motor vehicle 10 is shown driving along a road 12 that has a dashed line 14 indicating a boundary of a lane of the road 12. The motor vehicle 10 is equipped with blind spot sensors 16, 18 disposed along each side 20, 22 of the motor vehicle 10. The motor vehicle 10 is also equipped with two side rear view mirror assemblies 24, 26 that extend out from each of these sides 20, 22 respectively. The side rear view mirror assemblies 24, 26 are used by an operator, graphically represented by a circle 28 in Figure 1, to identify things that are going on outside the motor vehicle 10 rearwardly thereof. The operator 28 will adjust the side rear view mirror assemblies 24, 26 in a manner which allows the operator 28 to be satisfied that as much of the space rearward that can be viewed is being viewed by the operator 28. While most, if not all, motor vehicles 10 are equipped with two side rear view mirror assemblies 24, 26, the remainder of the discussion will focus on the side rear view mirror assembly 26 that is on the driver side 22 of the motor vehicle 10. It will be appreciated by those skilled in the art that the following discussion with regard to the driver side rear view mirror assembly 26 applies equally to the passenger side rear view mirror assembly 24.

When an operator 28 uses a side rear view mirror assembly 26, it is typically adjusted such that the orientation of the mirror includes a portion of the driver side 22 of the motor vehicle therein. The operator 28 does this for purposes of orientation. As is shown in Figure 1, the field of view for the side view mirror generally includes an angle α. Disposed adjacent the field of view 29 that is visible to the operator 28 is what is commonly referred to as a blind spot 31 that extends generally through an angle β. The operator 28 cannot see what is in the blind spot 31, crosshatched in Figure 1 without turning the head of the operator 28 in that direction. Thus, the operator 28 cannot see anything that is in the blind spot 31 through angle [beta] by looking in the side rear view mirror assembly 26. It is the blind spot sensor 18 that determines whether an object 30, a motor vehicle shown in Figure 1, is in the blind spot. If so, the blind spot sensor 18 will transmit over the vehicle communication system an appropriate signal to eventually indicate to the operator 28 that an object does in fact exist in the blind spot 31. It will be the operator's decision as to whether the operator 28 will turn his or her head to view the object 30 or to operate as if the object 30 continues to be in the blind spot 31 and act accordingly with regard to the operation and direction of travel of the motor vehicle 10.

Referring to Figure 2, the side rear view mirror assembly is generally indicated at 26. The perspective of this Figure is from that of the operator 28 as the operator 28 looks into the side rear view mirror assembly 26 to see that which is rearward of the operator 28 and a portion of the motor vehicle 10. Figure 2 includes a portion of a door 32 and a window 34.

The side rear view mirror assembly includes a base 38 that is fixedly secured to the motor vehicle 10 and, more specifically, the door 32 of the motor vehicle 10. The base 38 may or may not include a sail similar to the one shown in Figure 2. The base 38 is secured to the door 32 through known means. Depending on the design of the base 38, the base 38 may include either a lower rear wall 37 or an upper rear wall 39, or both.

The side rear view mirror assembly 26 also includes a mirror case 40 that is movably secured to the base 38. The mirror case 40 is movable in that it may be pivoted about the base 38 to allow the mirror case 40 to move closer to the side 22 of the motor vehicle 10 when situations require a narrower profile of motor vehicle 10. The pivoting of the mirror case 40 also comes in handy when the motor vehicle moves with respect to a fixed object in close proximity therewith such that the mirror case 40 is pushed in one direction or another due to the relative tightness of the position at which the motor vehicle 10 is operating.

The mirror case 40 defines a housing 42 and a mirror opening 44. The mirror opening 44 faces rearwardly with respect to forward direction of the motor vehicle 10. The mirror case 40 may include additional openings other than the mirror opening 44 for side markers, turn signals, security lights, sensors or cameras and the like. Otherwise, the mirror case 40 includes a housing 42 that is aerodynamic and aesthetically similar to the general design of the motor vehicle 10.

The blind spot indicator 62 is positioned adjacent of the mirror glass or behind the mirror glass. The blind spot indicator 62 includes a light source 64 that is illuminated when the blind spot sensor 18 senses the presence of the object 30 in the blind spot of the motor vehicle 10.

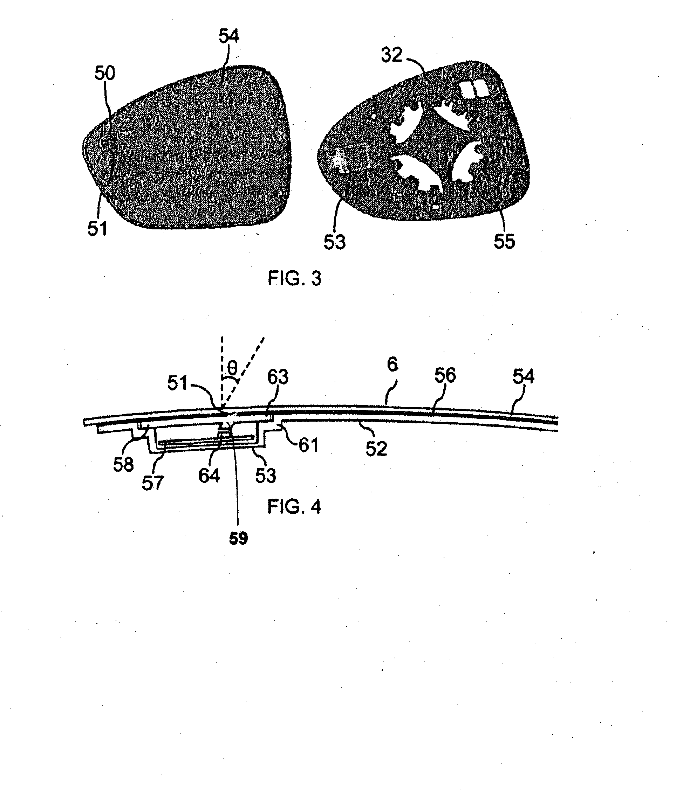

Fig 3 shows a view on the front side of a glass mirror and a view on top of a backing plate. The mirror glass 54 is cut to fit into the mirror opening 44 of a rear view mirror assembly. On the left outer side of the mirror glass 54 a small icon 50 is engraved that shows the ISO symbol of two vehicles in an overtaking position. Below this symbol a circle 51 is visible, through which the light of indicator shines in direction to operator 28. A backing plate 52 is adapted to from mounting means 55 for an actuator and openings to allow threading a harness.

Figure 4 shows a cross section of a mirror glass with attached backing plate. The mirror glass 54 has a front side 6 that is visible for the driver. On the front side or in an alternative embodiment on the back side a reflective surface 56 reflects light in the visible spectrum. The reflective material is normally a metal or an alloy that is sputtered onto the glass substrate. For example chromium is used to achieve a reflective surface. In the area of the circle 51 reflective material is deleted totally or to a defined remaining thickness by laser engraving. It is possible to use a very thin remaining reflective surface 56 which appears semi-transparent to operator. Some mirror glasses have additional color protective layers to protect the reflective layer and to avoid semi transparent appearance. These color layers must also be deleted for the indicator light to shine though the mirror glass. If the reflective layer is an interference layer only a part of the material must be deleted to allow light to shine through.

The backing plate 52 is attached to the mirror glass normally by a double side glue foil. The backing plate forms an integrated mounting space 53 that hosts the indicator light. The mounting space is formed to cover at least a printed circuit board 57, a light source 64 and a cover 58. The printed circuit board 57 is mounted on the bottom of the mounting space 53 and the light source in form of a LED is attached on the top of the printed circuit board. The mounting space 53 forms shoulders 61 to be used as bearing face for the cover 58. The end areas 63 of the cover fit into the space that is formed by the shoulder 61 of the mounting space. The cover is formed as a plate to close the mounting space and integrated into the cover plate a light guiding pin 59 is formed too. The light guiding pin is directed in direction to the LED and inclined versus the vertical by an angle theta. The angle theta allows a direction of light from the light source 64 into the light guide pin 59 through the circle opening 51 and the mirror glass 54 to driver's eyes.

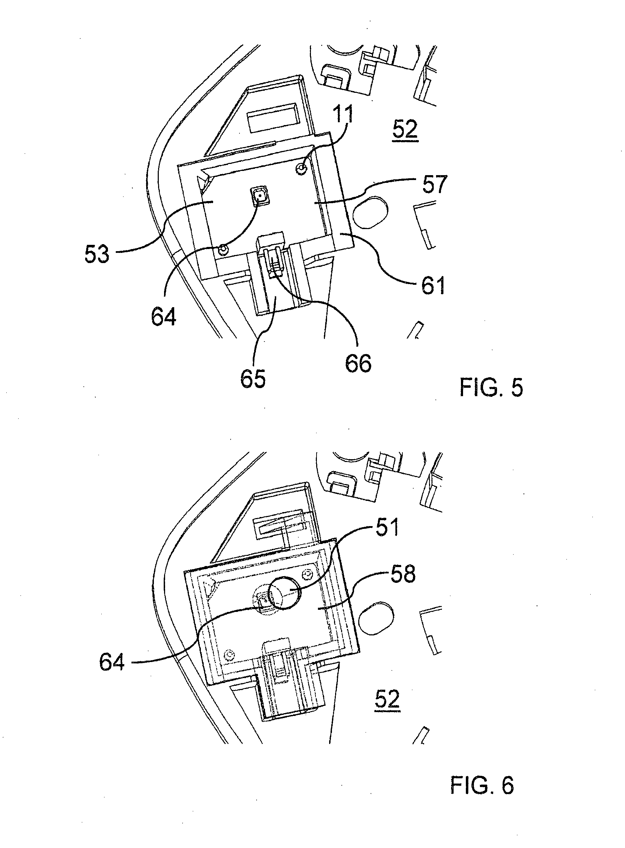

Figure 5 shows a view from top on to the backing plate 52. The mounting space 53 is surrounded by the shoulder 61. The printed circuit board 57 is mounted to the bottom of the mounting space 52 by mounting pins or screws 11. Using mounting pins allows to integrate them in the mounting space 53 during molding process. The LED 64 is a top mounted LED. The mounting space includes a connection area 65, that hosts a connector 66 or connector pins to contact the printed circuit board.

In Figure 6 the open mounting space 53 is closed with the cover 58. The cover is glued to the shoulders 61 of the mounting space. In another embodiment the cover 58 is mounted with a seal that is formed on the shoulders of the mounting space. The circle 51 shows the position of the circle in the reflective surface. The light guiding pin is directed from this circle position versus the light source 64. In this embodiment the mounting space 53 has a rectangular shape adapted to the seize of the printed circuit board. The height of the mounting space 53 is defined by the mounting height of the LED and the light guiding pin 59.

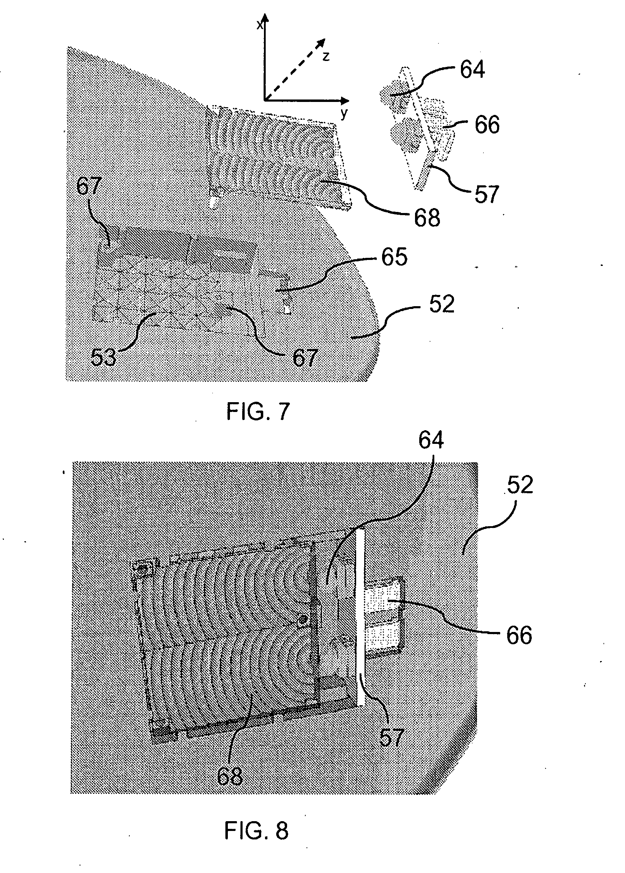

Figures 7 and 8 show an embodiment with integrated indicator into the backing plate. The backing plate 52 includes a mounting space 53 formed integrally in the same plastic device. The mounting space has a connection area 65 and supports 67. A rectangular light guide tray 68 is adapted to be mounted in the mounting space. Two LEDs 64 are mounted on a printed circuit board 57 with connection pins 66.

Figure 8 shows the embodiment as it is mounted in the mounting space 53. The light guide try 68 is screwed to the support members 67 of the mounting space. The printed circuit board is integrated rectangular to the mounting space bottom. Two LEDs 64 are installed in front of the front face 60 of the light guide that forms two trays.

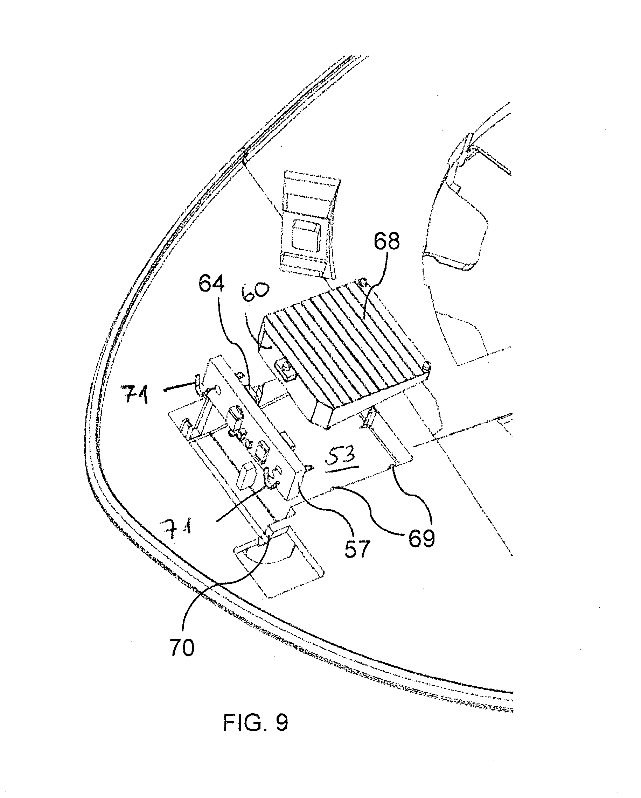

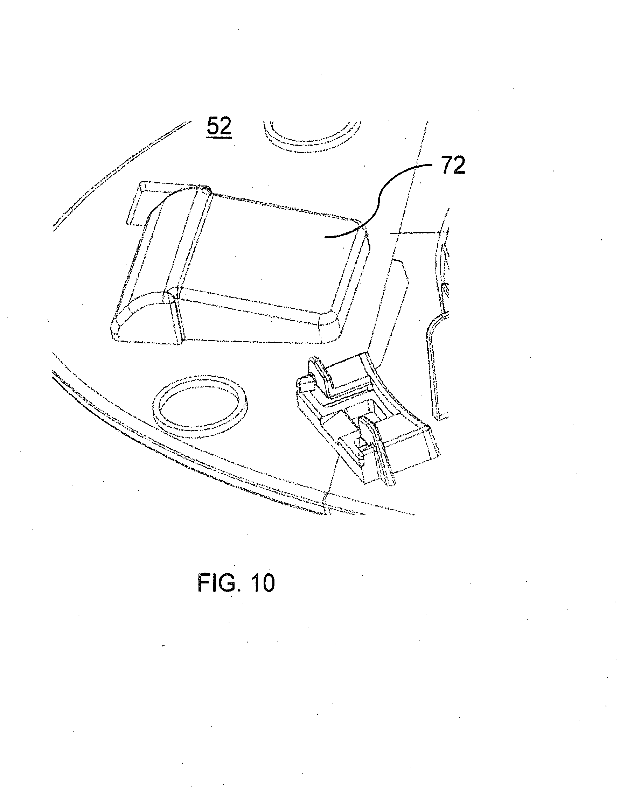

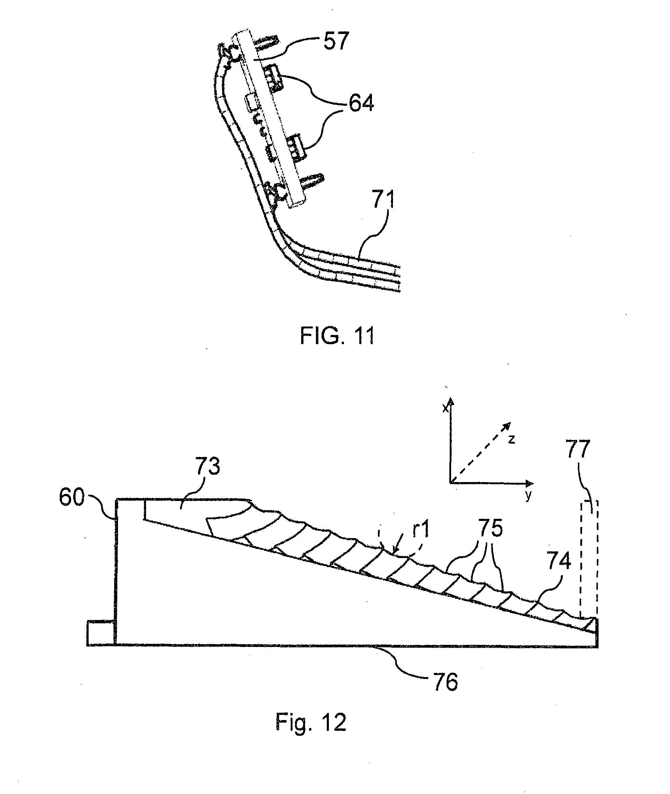

Figures 9 and 10 show a preferred solution of the invention. The backing plate includes a mounting space 53 that is adapted to host a wedge formed light guide tray 68. The light guide tray 68 is pressed into the opening of the mounting space 53 where small noses 69 hold the light guide tray 68 in the opening. The mounting space has lead through 70 for cables to contact the printed circuit board. The size of the lead through is configured to allow the two contact cables 71 to be installed. The small remaining opening must not be closed after final installation. The small opening helps to exchange air and humidity in the finally closed indicator. Details of the board and the cables can be seen in figure 11.

Figure 10 shows the rear side 72 of the backing plate 52. The form of the mounting space is adapted to the wedged shape of the light guide tray 68. The highest position of the backside cover is the mounting place of the printed circuit board. The total height is small for the printed circuit board has the dimension only to host the LEDs.

The bottom of the mounting space 53 declines slightly to form a wedged structure. The opening for the cables is not visible for it is on the hidden side of the mounting space.

Figure 12 shows a cross section of the light guide tray 68 along its y- axis. The light guide device is wedge shaped. Starting from the front face 60 an area for free travelling of light is provided that declines slightly. In this area light beams are not reflected and can travel undisturbed. The light in this part of the light guide tray 68 is not parallel, for the light source, the LED has an angle of emission of about 120 degrees and the light of the LED 64 is not focused into the light guide tray 68. The inner declining reflective surface 74 that reflects light by total reflection conditions has a tile structure without any steps. Circle segments form parts 75 of the reflective surface 74. These parts have radii r1 as marked in the drawing. In this example all parts 75 have the same radius r1 und the contact lines between the single parts have chamfered edges. The contact lines do not contribute really to the light defection and reflection.

In an alternative embodiment the parts 75 have increasing or decreasing radii over the length y of the wedged light guide tray.

The plane surface 76 lies parallel to glass surface and is not protected or covered by an additional cover. The whole indicator is covered by the mirror glass only. In addition to the design shown in the drawing the plane surface 76 can be structured with a prismatic structure to increase the efficiency of light beam deflection versus the operator's eyes. A spacer 77 is used to mount the light guide tray 68 in the mounting space 53. The spacer 77 has the function to hinder the light guide tray to tilt in the mounting space and to be a bearing point for ejectors in the plastic molding tool.

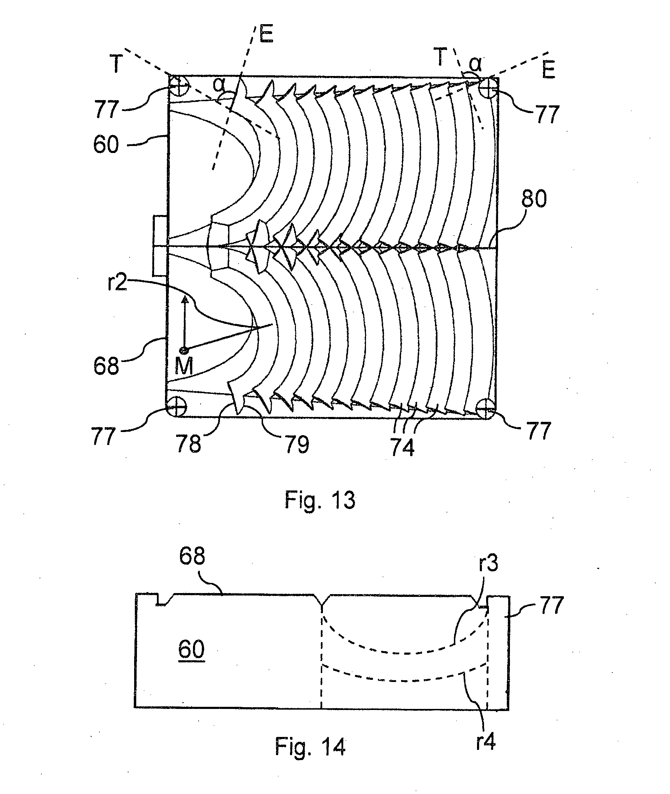

Figure 13 shows a top view on a light guide tray 68 with spacers 77 arranged at the outer points of the structure. The light guide is divided in two trays along a middle line 80. In alternative embodiments the tray structures are used as a single light guide with one LED or multiple light guides with several LEDs. With multiple structures a broader surface can be illuminated. As an example it is possible to use a first LED as alert indicator for object detection in a blind sport and illuminate with the first light guide tray a first symbol as an ISO symbol for overtaking vehicles. This symbol is illuminated by using a red light LED. The parallel arranged second light guide tray is illuminated by a second LED that reacts to a signal of a temperature control and is illuminated by another colored LED for example a white LED. With the tray light guide structure several combinations of indictors with several colors are created.

The tile structure has circle segments or parts 75 with radius r3 and radius r3 increases from surface of light coupling at the front face 60 to the end of the light guide tray. In addition the middle point of the circles moves along the arrow in drawing 13. Part by part 75 the radius r3 increases slightly and continuously. The parts 75 ends up in end facets 78 which have an angle α between the end facet E and the tangent T to the end of the circle segment. The angle α is kept constant along the whole light guide tray. The end facet 78 is attached with a curved shoulder 79 to the circle segments of the structure.

Figure 14 shows a cross section through the front face 60 of the light guide tray 68. The radii of the parts 75 as schematically inserted in dotted lines. Close to the front face 60 the parts 75 have small radii r3 and are strongly curved to build a tray. The curvatures of the parts 75 decrease along the wedged light guide and ends up in a radius r4 that is bigger than r3 close to the front face.

The light guide forms a tray structure that starts at the coupling in end being the front face of the light guide and ends at the small side of the wedge. Using more than one LED makes it necessary to use more than one light guide tray. For the complex structure of the light guide tray deflects light very efficient to driver's eyes a reflector in the indicator is not necessary.

The deflection angle from the vertical line to the mirror glass is around 15 to 50 degrees. The angle can be adapted by dimensioning of the curved parts 75 of the light guide by adapting radii.

A classical reflector is defined as phenomenon of a propagating wave being thrown back from a surface. Total internal reflection is an optical phenomenon that occurs when a ray of light strikes a medium boundary at an angle larger than a particular critical angle with respect to the normal to the surface. So the solution uses the total reflection phenomenon.

For the indicator does not use a reflector the dimension of the optical indicator is small. The height of the mounting space is only limited by size of LEDs and the related electrical connections and the printed circuit board. The optical indicator does not have a cover plate for the mirror glass covers the indicator. Normally the backing plate with the integrated indicator is glued to the mirror glass with a double die glue foil. But every other way to connect the two parts is possible.

The light shines through symbols that are prepared out of the reflective or color layer of the mirror glass to be visible by the driver.

## Claims

1. Rear view mirror assembly composing at least a mirror base and a mirror head covering a mirror glass (54) mounted into the mirror head and an optical alert indicator (62) that produces light in reaction to a sensor signal to inform operator (28) about hazardous information and the light shines through the mirror glass (54), with the mirror glass (54) being mounted to a backing plate (52) that has an integrally formed mounting space (53) for at least one LED (64) and at least one light guide tray (68) with the at least one LED (64) being installed in front of a front face (60) of the tray (68), **characterized in that** the tray (68) has a wedged shape in cross-section along its y-axis starting from the front face (60) which extends in a plane perpendicular to said y-axis,
the tray (68) provides, starting from its front face (60), an area for free travelling of light that declines slightly,
an inner declining surface (74) of the tray (68) declines along the y-axis, reflects light by total reflection conditions and has a tile structure without any steps,
a plane surface (76) of the tray (68) opposite the declining surface (74) extends along the y-axis and lies parallel to the surface of the mirror glass (54), and
the tile structure has circle segments (75) each with a first radius r3, the middle points (M) of the first radii r3 being arranged along a line parallel to the front face (60) of the light guide tray (68) and the first radii r3 increasing from the light coupling front face (60) to the end of the light guide tray (68) along the y-axis such that the tray (68) is curved with the first radius r3 in cross-section in a plane parallel to the front face (60) to form the tray such that the tray is opened versus its end.

2. Rear view mirror assembly according claim 1, **characterized in that**
the backing plate (52) is connected to the mirror glass (54), wherein at least one symbol (50) is visible by deleting at least a part of the reflective layer (56) and/or color layer of the mirror glass.

3. Rear view mirror assembly according claim 1, **characterized in that**
the circle segments are formed by parts (75) that in addition to the curvature with the first radii r3 are curved in cross-section in a plane comprising the y-axis with a second radius r1 each.

4. Rear view mirror assembly according claim 1, **characterized in that**
the circle segments are formed by parts (75) which have end facets (78), said end facets (78, E) and tangents (T) to the circle segments form an angle alpha.

5. Rear view mirror assembly according claim 1, **characterized in that**
the light guide tray (68) has at least one spacer (77) to be mounted in the mounting space (53) of the backing plate (52).

6. Rear view mirror assembly according claim 1, **characterized in that**
the mounting space (53) of the backing plate (52) is following the wedged shaped form of the light guide tray (68).

7. Rear view mirror assembly according claim 1, **characterized in that**
the mounting space (53) of the backing plate has noses (69) to fix the light guide tray (68).

8. Rear view mirror assembly according claims 1, **characterized in that**
LEDs emit light to parallel light guide trays (68) having different colors.

9. Rear view mirror assembly according claim 1, **characterized in that**
different LEDs illuminate different symbols in reaction to different sensor signals.

## Patentansprüche

1. Rückspiegelanordnung, umfassend: wenigstens eine Spiegelbasis und einen Spiegelkopf, der ein in den Spiegelkopf eingebautes Spiegelglas (54) abdeckt, und einen optischen Warnanzeiger (62), der als Reaktion auf ein Sensorsignal Licht erzeugt, um eine Bedienperson (28) über eine Gefahreninformation zu informieren, wobei das Licht durch das Spiegelglas (54) scheint, wobei das Spiegelglas (54) an einer Trägerplatte (52) angebracht ist, die einen einstückig ausgebildeten Einbauraum (53) für wenigstens eine LED (64) und wenigstens eine Lichtleiterschale (68) aufweist, wobei die wenigstens eine LED (64) vor einer Vorderfläche (60) der Schale (68) installiert ist, **dadurch gekennzeichnet, dass**
die Schale (68) entlang ihrer y-Achse, beginnend an der Vorderfläche (60), die sich in einer Ebene senkrecht zur y-Achse erstreckt, einen keilförmigen Querschnitt aufweist, die Schale (68), beginnend an ihrer Vorderfläche (60), einen Bereich für die ungehinderte Fortbewegung von Licht bereitstellt, der leicht geneigt ist,
eine geneigte Innenfläche (74) der Schale (68) entlang der y-Achse geneigt ist, aufgrund von Totalreflexionsbedingungen Licht reflektiert und eine Kachelstruktur ohne jegliche Absätze aufweist,
sich eine ebene Oberfläche (76) der Schale (68) gegenüber der geneigten Oberfläche (74) entlang der y-Achse erstreckt und parallel zur Oberfläche des Spiegelglases (54) liegt, und
die Kachelstruktur Kreissegmente (75) mit jeweils einem ersten Radius r3 aufweist, wobei die Mittelpunkte (M) der ersten Radien r3 entlang einer zur Vorderfläche (60) der Lichtleiterschale (68) parallelen Linie angeordnet sind und die ersten Radien r3 von der Licht einkoppelnden Vorderfläche (60) zum Ende der Lichtleiterschale (68) hin entlang der y-Achse derart zunehmen, dass die Schale (68) in einer zur Vorderfläche (60) parallelen Ebene mit dem ersten Radius r3 im Querschnitt gekrümmt ist, um die Schale derart auszubilden, dass die Schale gegen ihr Ende offen ist.

2. Rückspiegelanordnung nach Anspruch 1, **dadurch gekennzeichnet, dass**
die Trägerplatte (52) mit dem Spiegelglas (54) verbunden ist, wobei durch die Entfernung wenigstens eines Teils der reflektierenden Schicht (56) und/oder der Farbschicht des Spiegelglases wenigstens ein Symbol (50) sichtbar ist.

3. Rückspiegelanordnung nach Anspruch 1, **dadurch gekennzeichnet, dass**
die Kreissegmente durch Teile (75) ausgebildet sind, die, zusätzlich zur Krümmung mit den ersten Radien r3, in einer die y-Achse umfassenden Ebene jeweils mit einem zweiten Radius r1 im Querschnitt gekrümmt sind.

4. Rückspiegelanordnung nach Anspruch 1, **dadurch gekennzeichnet, dass**
die Kreissegmente durch Teile (75) ausgebildet sind, die Endfacetten (78) aufweisen, wobei die Endfacetten (78, E) und Tangenten (T) der Kreissegmente einen Winkel Alpha ausbilden.

5. Rückspiegelanordnung nach Anspruch 1, **dadurch gekennzeichnet, dass**
die Lichtleiterschale (68) wenigstens einen im Einbauraum (53) der Trägerplatte (52) einzubauenden Abstandhalter (77) aufweist.

6. Rückspiegelanordnung nach Anspruch 1, **dadurch gekennzeichnet, dass**
der Einbauraum (53) der Trägerplatte (52) der Keilform der Lichtleiterschale (68) folgt.

7. Rückspiegelanordnung nach Anspruch 1, **dadurch gekennzeichnet, dass**
der Einbauraum (53) der Trägerplatte Nasen (69) zur Befestigung der Lichtleiterschale (68) aufweist.

8. Rückspiegelanordnung nach Anspruch 1, **dadurch gekennzeichnet, dass**
LEDs Licht zu parallelen Lichtleiterschalen (68) ausstrahlen, die verschiedene Farben aufweisen.

9. Rückspiegelanordnung nach Anspruch 1, **dadurch gekennzeichnet, dass**
verschiedene LEDs als Reaktion auf verschiedene Sensorsignale verschiedene Symbole aufleuchten lassen.

## Revendications

1. Ensemble de rétroviseur comprenant au moins une base de miroir et une tête de miroir recouvrant un verre de miroir (54) monté dans la tête de miroir et un indicateur d'alarme optique (62) qui produit une lumière en réaction à un signal de détecteur pour informer un opérateur (28) d'une information de danger et la lumière éclaire à travers le verre de miroir (54), le verre de miroir (54) étant monté sur une plaque de support (52) qui a un espace de montage formé d'un seul tenant (53) pour une diode électroluminescente LED (64) et au moins un plateau de guidage de lumière (68) ayant au moins une LED (64) installée à l'avant d'une face avant (60) du plateau (68), **caractérisé en ce que** le plateau (68) a en coupe transversale une forme de coin le long de son axe des y en démarrant depuis la face avant (60) qui s'étend dans un plan perpendiculaire à cet axe des y,
le plateau (68) fournit, en démarrant à partir de sa face avant (60), une zone de déplacement libre de la lumière, qui diminue légèrement,
une surface intérieure inclinée (74) du plateau (68) s'abaissant le long de l'axe des y, réfléchit la lumière par des conditions de réflexion totale et a une structure de tuiles sans aucun gradin,
une surface plane (76) du plateau (68) opposée à la surface inclinée (74) s'étend le long de l'axe des y et est parallèle à la surface du verre de miroir (54), et
la structure de tuiles a des segments de cercle (75) ayant chacun un premier rayon r3, les points médians (M) des premiers rayon r3 étant agencés le long d'une ligne parallèle à la face avant (60) du plateau de guidage de lumière (68) et les premiers rayons r3 augmentant depuis la face avant de couplage de lumière (60) vers l'extrémité du plateau de guidage de lumière (68) le long de l'axe des y de telle sorte que le plateau (68) est incurvé en ayant le premier rayon r3 en coupe transversale dans un plan parallèle à la face avant (60) pour former le plateau de telle sorte que le plateau est ouvert à l'opposé de son extrémité.

2. Ensemble de rétroviseur selon la revendication 1, **caractérisé en ce**
**que** la plaque de support (52) est reliée au verre de miroir (54), dans lequel au moins un symbole (50) est visible en supprimant au moins une partie de la couche réflectrice (56) et/ou d'une couche colorée du verre de miroir.

3. Rétroviseur selon la revendication 1, **caractérisé en ce que**
les segments de cercle sont formés par des parties (75) qui en plus de la courbure ayant les premiers rayons r3 sont incurvées en coupe dans un plan comprenant l'axe des y, chacune ayant un second rayon r1.

4. Ensemble de rétroviseur selon la revendication 1, **caractérisé en ce que**
les segments de cercle sont formés par des parties (75) qui ont des facettes d'extrémité (78), les facettes d'extrémité (78, E) et les tangentes (T) aux segments de cercle formant un angle alpha.

5. Ensemble de rétroviseur selon la revendication 1, **caractérisé en ce**
**que** le plateau de guidage de lumière (68) a au moins un écarteur (77) pour être monté dans l'espace de montage (53) de la plaque de support (52).

6. Ensemble de rétroviseur selon la revendication 1, **caractérisé en ce**
**que** l'espace de montage (53) de la plaque de support (52) suit la forme en coin du plateau de guidage de lumière (60).

7. Ensemble de rétroviseur selon la revendication 1, **caractérisé en ce**
**que** l'espace de montage (53) de la plaque de support comporte des nez (69) pour fixer le plateau de guidage de lumière (68).

8. Ensemble de rétroviseur selon la revendication 1, **caractérisé en ce**
**que** les LED émettent une lumière vers des plateaux de guidage de lumière parallèle (68) ayant des couleurs différentes.

9. Ensemble de rétroviseur selon la revendication 1, **caractérisé en ce**
**que** des LED différentes éclairent des symboles différents en réaction à des signaux de capteurs différents.
